# EUROPÄISCHE PATENTANMELDUNG

(11) **EP 2 492 567 A1**
(43) Veröffentlichungstag der Anmeldung: **29.08.2012**
(21) Anmeldenummer: 11155317.8
(22) Anmeldetag: 22.02.2011
(51) Int. Cl.: F16L 19/02

(54) **Lösbare Verbindung mit Überwurfmutter**

(71) Anmelder: SIEMENS AKTIENGESELLSCHAFT, 80333 München (DE)
(72) Erfinder: Geißler, Bastian, 45219, Essen (DE)

(57) **Zusammenfassung**

Die Erfindung betrifft eine Verbindungsanordnung umfassend ein erstes Rohrstutzenende (11) und ein zweites Rohrstutzenende (16), wobei mit einer Überwurfmutter (19) das erste Rohrstutzenende (11) mit dem zweiten Rohrstutzenende (16) lösbar verbunden ist und ein Gewindering (17) zwischen dem zweiten Rohrstutzenende (16) und der Überwurfmutter (19) angeordnet ist.

## Beschreibung

Die Erfindung betrifft eine Verbindungsanordnung umfassend einen ersten Rohrstutzen mit einem ersten Rohrstutzenende, einem zweiten Rohrstutzen mit einem zweiten Rohrstutzenende und eine Überwurfmutter, die über ein Gewinde mit dem ersten Rohrstutzen verbunden ist.

Derartige Verbindungsanordnungen werden in verschiedenen Bereichen des Maschinenbaus verwendet. Insbesondere wird solch eine Verbindungsanordnung im Strömungsmaschinenbau, insbesondere im Dampfturbinenbau eingesetzt. In Hochdruckdampfturbinen wird in der Regel ein Dampf verwendet, der vergleichsweise sehr hohe Dampfparameter aufweist. So liegen die Temperaturen und die Drücke des Frischdampfes für eine Hochdruckdampfturbine bei über 600°C und über 300bar. Das technische Problem hierbei ist, den Dampf über geeignete Mittel in den Strömungspfad der Hochdruckteilturbine zu führen. Eine Hochdruckdampfturbine umfasst im Wesentlichen einen Rotor, ein Innengehäuse und ein um das Innengehäuse angeordnetes Außengehäuse. Der Dampf muss, um in den Strömungspfad zu gelangen, durch das Außengehäuse und das Innengehäuse geführt werden. In der Regel wird der Dampf das Außengehäuse und über einen Einströmstutzen durch das Innengehäuse in den Strömungspfad geführt. Der Einströmstutzen ist mit einer Ventilanordnung verbunden. Die hohen Dampfparameter erfordern ebenfalls erhöhte Anforderungen an die Ventilanordnung, so dass die Ventilanordnung vergleichsweise hohe Massen und verbesserte Kühlsysteme aufweist. Die Ventilanordnung weist in der Regel ein Rohrstutzenende auf, das mit dem Einströmstutzen des Außengehäuses, das auch als Rohrstutzenende ausgebildet ist, angeordnet wird. Diese Verbindung sollte möglichst lösbar ausgestaltet sein, damit bei Revisionsarbeiten ein Zugang zu dem Außengehäuse möglich ist. Herkömmliche Verbindungsanordnungen umfassen einen ersten Rohrstutzen mit einem ersten Rohrstutzenende, wobei dieses Rohrstutzenende ein Gewinde aufweist sowie eine Ventilanordnung mit einem zweiten Rohrstutzen umfassend ein zweites Rohrstutzenende. Dieses zweite Rohrstutzenende weist in der Regel denselben Durchmesser wie das erste Rohrstutzenende auf. Über eine vergleichsweise große Überwurfmutter wird das erste Rohrstutzenende mit dem zweiten Rohrstutzenende wirksam miteinander über Gewindekräfte verbunden. Um eine Übertragungskraft von dem Ventil auf das Außengehäuse übertragen zu können, weist die Überwurfmutter einen Vorsprung auf, der in einem ersten Montageschritt um das erste Rohrstutzenende angeordnet wird. In einem zweiten Montageschritt wir das Rohrstutzenende mit dem restlichen Ventilstutzen aufwendig durch eine kostenintensive Engspaltschweißung miteinander verschweißt. Allerdings kann die Überwurfmutter anschließend nicht mehr zerstörungsfrei von der Ventilanordnung gelöst werden.

Wünschenswert wäre es, eine lösbare Verbindungsanordnung zu haben, mit der es möglich ist, die Überwurfmutter vom Ventilgehäuse zu trennen. Es ist daher Aufgabe der Erfindung, eine lösbare Verbindungsanordnung anzugeben, bei der die kostenintensive Engspaltschweißung entfällt.

Gelöst wird diese Aufgabe durch eine Verbindungsanordnung umfassend einen ersten Rohrstutzen mit einem ersten Rohrstutzenende, einem zweiten Rohrstutzen mit einem zweiten Rohrstutzenende, einem Gewindering, der auf dem zweiten Rohrstutzenden angeordnet ist und eine Überwurfmutter, die über ein Gewinde mit dem ersten Rohrstutzen verbunden ist und derart ausgebildet ist, dass eine Übertragungskraft auf den Gewindering in Richtung des ersten Rohrstutzens ausübbar ist.

Somit wird erfindungsgemäß vorgeschlagen, ein weiteres Bauteil zu berücksichtigen und zwar einen Gewindering, der auf dem zweiten Rohrstutzenende angeordnet ist. Der Gewindering wird über ein Gewinde zwischen dem Gewindering und dem zweiten Rohrstutzenende aufgebracht. Der Außendurchmesser des Gewinderings ist anschließend im Wesentlichen gleichgroß wie der Durchmesser des ersten Rohrstutzenendes. Die Kraft der Überwurfmutter wirkt auf den Gewindering. Die Überwurfmutter wird dabei derart ausgebildet, dass diese, wenn der Gewindering nicht auf dem zweiten Rohrstutzen angeordnet ist, von dem zweiten Rohrstutzenende entfernt werden kann. Das bedeutet, dass der minimale Durchmesser der Überwurfmutter größer ist als der Durchmesser des zweiten Rohrstutzenendes. Somit kann das zweite Rohrstutzende aus einem Guss gefertigt werden, wobei eine komplizierte und kostenintensive Engspaltschweißung entfallen kann.

In den Unteransprüchen sind vorteilhafte Weiterbildungen angegeben.

So ist es vorteilhaft, wenn der Gewindering über ein Gewinde mit dem zweiten Rohrstutzenende verbunden ist. Dadurch wird eine vergleichsweise einfache Möglichkeit angeboten, den Gewindering lösbar mit dem zweiten Rohrstutzenende zu verbinden.

In einer weiteren vorteilhaften Weiterbildung sind der Gewindering und die Überwurfmutter derart ausgebildet, dass die Überwurfmutter von dem zweiten Rohrstutzenende trennbar ist. Das bedeutet, dass in erster Näherung der innere Durchmesser der Überwurfmutter im Wesentlichen Größer ist als der äußere Durchmesser des zweiten Rohrstutzenendes.

In einer weiteren vorteilhaften Weiterbildung weist das erste Rohrstutzenende einen ersten Durchmesser und der Gewindering einen äußeren Durchmesser auf, wobei der erste Durchmesser und der äußere Durchmesser im Wesentlichen identisch sind. Somit wird eine optimale Kraftübertragung vom Gewindering auf das erste Rohrstutzenende ermöglicht.

In einer weiteren vorteilhaften Weiterbildung weist die Überwurfmutter einen Innenvorsprung mit einer Überwurfmutterkontaktfläche auf, die an dem Gewindering anliegt, wobei über die Überwurfmutterkontaktfläche die Übertragungskraft ausübbar ist. Vorteilhafterweise ist diese Überwurfmutterkontaktfläche im Wesentlichen senkrecht zu einer Symmetrieachse, die im Wesentlichen entlang der Strömungsachse zeigt, ausgebildet.

In einer weiteren vorteilhaften Ausbildung sind das erste Rohrstutzenende und das zweite Rohrstutzenende berührend aneinander angeordnet. Dadurch wird eine optimal dichtende Anordnung zwischen dem ersten Rohrstutzenende und dem zweiten Rohrstutzenende ausgebildet. Des Weiteren können noch zusätzliche Dichtelemente zwischen dem ersten Rohrstutzenende und dem zweiten Rohrstutzenende eingebaut werden.

In einer weiteren vorteilhaften Weiterbildung ist der erste Rohrstutzen als Einströmstutzen einer Strömungsmaschine und der zweite Rohrstutzen als Ventilstutzen eines Ventils ausgebildet.

Ausführungsbeispiele der Erfindung werden nachfolgend anhand der Zeichnung beschrieben. Diese sollen die Ausführungsbeispiele nicht maßstäblich darstellen, vielmehr ist die Zeichnung in schematisierter und/oder leicht verzerrter Form ausgeführt. Im Hinblick auf Ergänzungen der aus der Zeichnung unmittelbar erkennbaren Lehren wird hier auf den einschlägigen Stand der Technik verwiesen.

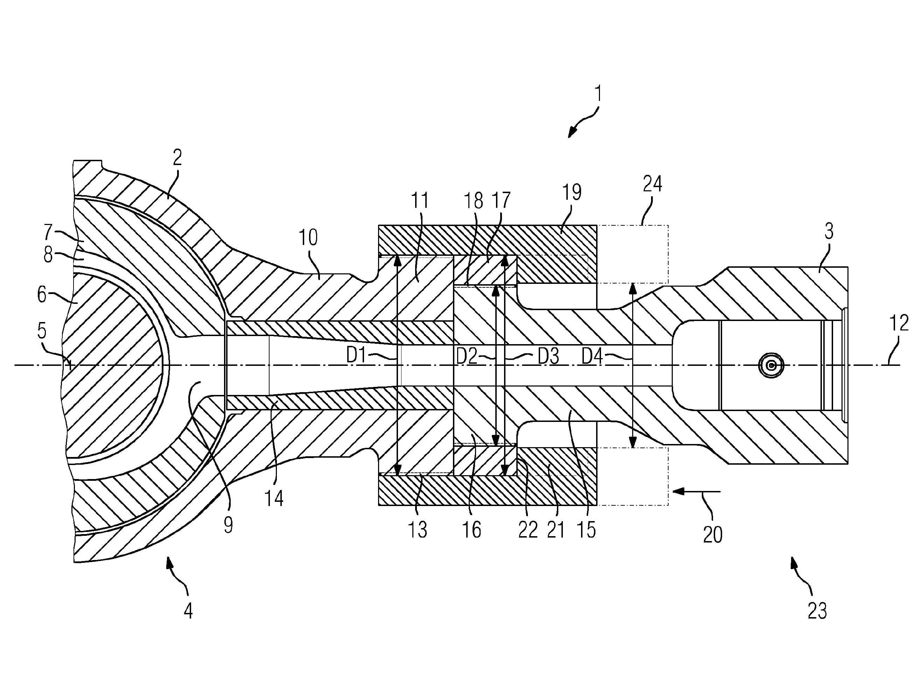

Im Einzelnen zeigt die Zeichnung in Figur 1 eine Querschnittsansicht der erfindungsgemäßen Verbindungsanordnung.

Die Verbindungsanordnung 1 gemäß der einzigen Figur umfasst im Wesentlichen ein Außengehäuse 2 und ein Ventilgehäuse 3. Das Außengehäuse 2 ist Teil einer Dampfturbine 4, die des Weiteren um eine Rotationsachse 5 drehbar gelagerten Rotor 6 und ein um den Rotor 6 angeordnetes Innengehäuse 7 aufweist. Zwischen dem Rotor 6 und dem Innengehäuse 7 ist ein nicht näher dargestellter Strömungskanal 8 ausgebildet, durch den im Betrieb über eine Einlassöffnung 9 im Innengehäuse 7 ein Dampf strömt. Dieser Dampf ist dabei ursächlich für eine Drehbewegung des Rotors 6 verantwortlich.

Das Außengehäuse 2 ist derart ausgebildet, dass dieser in einen ersten Rohrstutzen 10 mit einem ersten Rohrstutzenende 11 mündet. Der erste Rohrstutzen 10 und das erste Rohrstutzenende 11 sind im Wesentlichen um eine Symmetrieachse 12 rotationssymmetrisch ausgebildet. Das erste Rohrstutzenende 11 weist hierbei im Wesentlichen einen Durchmesser D1 auf. Am äußeren Ende des ersten Durchmessers D1 ist ein erstes Gewinde 13 angeordnet. Innerhalb des ersten Rohrstutzenendes 11 ist ein Ventilstutzen 14 dichtend gegenüber dem Innengehäuse 7 angeordnet.

Das Ventilgehäuse 3 umfasst einen im Wesentlichen um die Symmetrieachse 12 ausgebildeten zweiten Rohrstutzen 15 mit einem zweiten Rohrstutzenende 16. Das zweite Rohrstutzenende 16 weist einen zweiten Durchmesser D2 auf, der geringer ist als der erste Durchmesser D1. Am zweiten Rohrstutzenende 16 ist der Gewindering 17 über ein Gewinde 18 mit dem zweiten Rohrstutzenende 16 verbindbar. Der Durchmesser D3 des Gewinderings 17 entspricht in etwa dem ersten Durchmesser D1.

Eine Überwurfmutter 19 wird über das erste Gewinde 13 mit dem ersten Rohrstutzen 10 verbunden und derart ausgebildet, dass eine Übertragungskraft auf dem Gewindering 17 in Richtung 20 des ersten Rohrstutzens 10 ausübbar ist.

Der Gewindering 17 und die Überwurfmutter 19 sind hierbei derart ausgebildet, dass die Überwurfmutter 19 von dem zweiten Rohrstutzen 16 trennbar ist. Die Überwurfmutter 19 weist einen Innenvorsprung 21 auf, der mit einer Überwurfmutterkontaktfläche 22 versehen ist. Die Kraftübertragung in Richtung 20 erfolgt hierbei über die Überwurfmutterkontaktfläche 22 auf den Gewindering 17.

Das erste Rohrstutzenende 11 und das zweite Rohrstutzenende 16 sind hierbei derart ausgebildet, dass sie einander in Berührung stehen.

Das erste Rohrstutzende 11 bzw. der erste Rohrstutzen 10 ist als Einströmstutzen der Dampfturbine 4 und der zweite Rohrstutzen 15 als Ventilstutzen eines Ventils 23 ausgebildet.

Die Verbindungsanordnung 1 gemäß Figur ist sowohl im eingebauten als auch im ausgebauten Zustand dargestellt, wobei der ausgebaute Zustand durch eine strichpunktierte Linie 24 dargestellt ist. Die Überwurfmutter 19 wird hierbei so lange gedreht, bis das Gewinde 13 nicht mehr greift. In einem nächsten Schritt kann das komplette Ventil 23 mit Gewindering 17 und Überwurfmutter 19 vom ersten Rohrstutzenende 11 getrennt werden. Damit die Überwurfmutter 19 vom Ventil 23 getrennt werden kann, muss die Überwurfmutter 19 in eine Ausbauposition gebracht werden, die durch die strichpunktierte Linie dargestellt ist und mindestens eine Länge des Gewinderings 17 betragen muss. Sobald die Überwurfmutter 19 in dieser Ausbauposition angeordnet ist, kann der Gewindering 17 über das Gewinde 18 vom zweiten Rohrstutzenende 11 getrennt werden.

Sobald der Gewindering 17 vom zweiten Rohrstutzenende 16 gelöst ist, kann die Überwurfmutter 19, deren innerer Durchmesser D4 geringfügig größer ist als der zweite Durchmesser D2 vom zweiten Rohrstutzenende getrennt werden. Der innere Durchmesser D4 entspricht daher einem Innenradius des Innenvorsprungs 21.

Damit der Gewindering 17 sich während des Betriebes nicht löst, können in einer radialen Richtung weitere Schrauben, Bolzen oder Stifte durch den Gewindering 17 angeordnet werden.

Dazu muss der Gewindering 17 an zwei bis vier Stellen aufgebohrt werden. In diese Bohrungen werden anschließend Zylinderstifte oder Ähnliches eingelassen. Für Revisionen muss der Gewindering 17 nicht zwingend demontiert werden. Es genügt die Überwurfmutter 19 zu lösen, in Richtung Ventil 23 zu verschieben und dort zu fixieren.

Mit solch einer Verbindungsanordnung 1 kann das Ventil 23 aus einem Guss hergestellt werden. Darüber hinaus kann der Abstand zwischen dem Ventil 23 und der Dampfturbine 4 verkürzt werden, was einen kleineren Bauraum bedeutet.

## Patentansprüche

1. Verbindungsanordnung (1)
umfassend einen ersten Rohrstutzen (10) mit einem ersten Rohrstutzenende (11), einem zweiten Rohrstutzen (15) und einem zweiten Rohrstutzende (16), einen Gewindering (17), der auf dem zweiten Rohrstutzenende (16) angeordnet ist, und eine Überwurfmutter (19), die über ein Gewinde (13) mit dem ersten Rohrstutzen (10) verbunden ist und derart ausgebildet ist, dass eine Übertragungskraft auf den Gewindering (17) in Richtung des ersten Rohrstutzens (10) ausübbar ist.

2. Verbindungsanordnung (1) nach Anspruch 1,
wobei der Gewindering (17) über ein Gewinde (18) mit dem zweiten Rohrstutzenende (16) verbunden ist.

3. Verbindungsanordnung (1) nach Anspruch 1 oder 2,
wobei der Gewindering (17) und die Überwurfmutter (19) derart ausgebildet sind, dass die Überwurfmutter (19) von dem zweiten Rohrstutzen (15) trennbar ist.

4. Verbindungsanordnung (1) nach einem der vorhergehenden Ansprüche,
wobei das erste Rohrstutzenende (11) einen ersten Durchmesser (D1) aufweist und der Gewindering (17) einen äußeren Durchmesser (D3) aufweist,
wobei der erste Durchmesser (D1) und der äußere Durchmesser (D3) im Wesentlichen identisch sind.

5. Verbindungsanordnung (1) nach einem der vorhergehenden Ansprüche,
wobei die Überwurfmutter (19) einen Innenvorsprung (21) mit einer Überwurfmutterkontaktfläche (22) aufweist, die an den Gewindering (17) anliegt, wobei über die Überwurfmutterkontaktfläche (22) die Übertragungskraft ausübbar ist.

6. Verbindungsanordnung (1) nach einem der vorhergehenden Ansprüche,
wobei das erste Rohrstutzenende (11) und das zweite Rohrstutzenende (16) berührend aneinander angeordnet sind.

7. Verbindungsanordnung (1) nach einem der vorhergehenden Ansprüche,
wobei der erste Rohrstutzen (10) als Einströmstutzen einer Strömungsmaschine und der zweite Rohrstutzen (15) als Ventilstutzen eines Ventils (23) ausgebildet sind.
